# FASCICULE DE BREVET EUROPEEN

(11) **EP 1 665 490 B1**
(45) Date de publication et mention de la délivrance du brevet: **07.02.2007**
(21) Numéro de dépôt: 04787331.0
(22) Date de dépôt: 08.09.2004
(51) Int. Cl.: H02H 7/06

(54) **DISPOSITIF DE COMMANDE POUR ALTERNO-DEMARREUR, NOTAMMENT POUR VEHICULE AUTOMOBILE**
STEUEREINRICHTUNG FÜR EINEN ALTERNO-ANLASSER INSBESONDERE FÜR EIN KRAFTFAHRZEUG
CONTROL DEVICE FOR AN ALTERNO-STARTER, PARTICULARLY FOR A MOTOR VEHICLE

(30) Priorité: 08.09.2003 FR 0310555
(43) Date de publication de la demande: 07.06.2006
(73) Titulaire: VALEO EQUIPEMENTS ELECTRIQUES MOTEUR, 94017 Créteil Cedex (FR)
(72) Inventeur: PIERRET, Jean-Marie, F-75012 Paris (FR); LOUISE, Christophe, F-94160 Alforville (FR)
(74) Mandataire: de Lambilly Delorme, Marie Pierre
(86) Numéro de dépôt international: PCT/FR2004/002279
(87) Numéro de publication internationale: WO 2005/025025

(56) Documents cités:
- WO-A-03/032465
- US-B1- 6 353 307

## Description

### Domaine de l'invention

La présente invention concerne un dispositif de commande pour un alterno-démarreur, notamment de véhicule automobile.

### Etat de la technique

Ainsi qu'on le sait un alternateur du type polyphasé comporte un carter portant un rotor et un stator.

Ce stator entoure le rotor et comporte un corps sous la forme d'un paquet de tôles à encoches formant des rainures pour le montage de bobinages d'induit présentant des chignons s'étendant de part et d'autre du corps du stator.

L'alternateur est le plus souvent du type triphasé et comporte donc trois phases. En variante il comporte plus de trois phases, par exemple cinq ou six phases.

Chaque phase comporte au moins un bobinage d'induit.

Ces bobinages sont décalés angulairement et connectés en triangle ou en étoile. Ils sont reliés à leur sortie à un pont de redressement d'un courant alternatif en courant continu. Ce pont est monté entre la masse et une borne d'alimentation positive d'une batterie, elle-même reliée au potentiel positif du réseau de bord du véhicule automobile.

Les bobinages ou enroulements peuvent être réalisés avec du fil bobiné dans les encoches du corps du stator ou avec des barres d'éléments conducteurs montés dans les encoches pour former des réseaux d'épingles, comme décrit par exemple dans le document WO 92/06527. Ces barres peuvent être de section rectangulaire ou circulaire ou hexagonale ou autre.

En variante chaque phase comporte au moins deux bobinages montés en série, comme décrit dans le document WO92/06527 précité, ou en parallèle comme décrit par exemple dans les documents DE A 1563 361 ou EP A 0 454 039 ou FR A 2 737 063 avec présence dans ce cas de deux ponts redresseurs montés en parallèle et des connections étoile-étoile ou étoile - triangle des bobinages triphasés des phases. Un ou plusieurs bobinages sont donc montés dans chaque encoche du corps du stator.

Le rotor est solidaire d'un arbre monté centralement à rotation dans le carter à la faveur de moyens de palier, tels que des roulements à billes.

Le rotor est par exemple, comme décrit dans le document EP A 0 515 259, un rotor à griffes comprenant des roues polaires dotées de flasques présentant à leur périphérie externe des dents. Un bobinage d'excitation est monté entre les flasques. Des aimants permanents peuvent être intercalés entre les dents, comme décrit par exemple dans le document FR A 2 793 085.

En variante le rotor est à pôles saillants, un bobinage d'excitation étant monté autour de chaque pôle saillant.

En variante ce rotor à pôles saillants comporte également des aimants permanents alternants circonférentiellement avec les bobinages d'excitation comme décrit dans le document WO 02/054566.

Le carter comporte deux parties ajourées pour circulation de l'air. L'une de ces parties est appelée palier avant, l'autre partie est appelée palier arrière. Les paliers sont métalliques et reliés à la masse du véhicule.

Le rotor porte alors à l'une au moins de ses extrémités axiales un ventilateur interne pour refroidir l'alternateur comme visible dans ces deux documents WO 02/054566 et EP A 0 515 259.

En variante l'alternateur est refroidi par eau.

Le palier arrière porte un régulateur de tension relié à un porte balais, dont les balais coopèrent avec des bagues collectrices portées par l'extrémité arrière de l'arbre du rotor. Ces bagues sont reliées électriquement aux extrémités du ou des bobinages d'excitation du rotor.

L'arbre du rotor porte à son extrémité avant une poulie implantée à l'extérieur du palier avant et destinée à être entraînée à rotation par le moteur thermique, dit aussi moteur à combustion interne, du véhicule automobile via un dispositif de transmission comportant au moins une courroie.

Lorsque le ou les bobinages d'excitation du rotor sont alimentés électriquement à partir des balais et lorsque le moteur thermique du véhicule tourne, le rotor est magnétisé et la poulie de l'alternateur ainsi que l'arbre du rotor sont entraînés en rotation en sorte que les bobinages d'induit du stator génèrent un courant induit alternatif.

Le pont de redressement transforme de manière synchrone ce courant induit alternatif en courant continu pour charger la batterie et/ou alimenter les consommateurs électriques reliés au réseau de bord du véhicule automobile.

Ce pont comporte, comme décrit par exemple dans le document FR-A-2 745 445, des diodes et une pluralité de transistors montés en parallèle sur les diodes.

Les transistors sont avantageusement des transistors de puissance du type MOSFET et constituent des interrupteurs du type statique, que l'on peut commander, en mode moteur électrique, en agissant sur les grilles de ces transistors.

Dans ce cas le pont de redressement est également un pont de commande, appelé onduleur, et l'alternateur fonctionne de manière réversible en sorte que l'alternateur est utilisé, d'une part, comme générateur de courant et, d'autre part, comme moteur électrique.

Lorsque l'alternateur est utilisé comme moteur électrique on dit qu'il fonctionne en mode moteur électrique, tandis que lorsqu'il est utilisé comme générateur on dit qu'il fonctionne en mode alternateur ou générateur.

Le mode moteur électrique comporte un ou plusieurs modes. En effet l'alterno-démarreur sert à démarrer à froid ou à chaud le moteur thermique du véhicule automobile. On dit alors qu'il fonctionne en mode démarreur. Il peut également, comme décrit par exemple dans le document WO 02/060711, servir à entraîner un accessoire, par exemple lorsque le véhicule est à l'arrêt aux feux rouge, ou pour aider à la mise en route d'un accessoire, tel qu'un turbo compresseur. Il peut intervenir pour éviter que le moteur thermique du véhicule cale, ou pour déplacer temporairement le véhicule lors de manoeuvres au parking... etc. On dit alors qu'il fonctionne en mode moteur auxiliaire.

En mode générateur ou alternateur le moteur du véhicule entraîne en rotation le rotor via la poulie de l'alternateur. En mode moteur électrique le rotor entraîne en rotation la poulie de l'alternateur pour notamment démarrer le moteur du véhicule.

Un tel alternateur polyphasé et réversible est appelé alterno-démarreur et est relié de manière précitée à une batterie et à un réseau de bord via le pont redresseur et de commande. Pour ce faire, il est prévu une unité électronique de commande et de contrôle comportant des dispositifs de pilotage, appelés drivers, pour agir sur les grilles des transistors, qui commandent les différentes phases.

Cette unité électronique et le pont appartiennent donc à un dispositif de commande de l'alternateur-démarreur pour faire fonctionner celui-ci de manière réversible en mode alternateur et en mode moteur électrique.

Dans ce document FR-A-2 745 445 les transistors du type MOSFET intègrent par construction une diode entre leur drain et leur source. Ils permettent de réaliser le pont de redressement et de commande des phases avec uniquement des composants transistors de puissance qui jouent le rôle à la fois d'interrupteur, en mode moteur électrique, et de diodes de roue libre, en mode alternateur.

En mode moteur électrique, le pont est un onduleur, qui alimente les bobinages des phases du stator. Plus précisément on impose un courant continu, avantageusement maximal, dans le ou les bobinages d'excitation du rotor, constituant l'inducteur de l'alternateur, et on délivre sur les bobinages des phases du stator des signaux déphasés idéalement sinusoïdaux et en variante trapézoïdaux ou carrés.

L'unité de commande et de contrôle comporte de manière optionnelle des moyens pour la reconnaissance d'un signal codé autorisant le démarrage du moteur du véhicule et pilote les transistors MOSFET que si elle reçoit le signal codé.

Un résolveur ou des capteurs, par exemple des capteurs magnétiques à effet Hall comme décrit dans les documents FR A 2 807 231 et FR A 2 806 223, sont prévus pour mesurer la position angulaire du rotor par rapport au stator afin de synchroniser la commande des transistors.

Un interrupteur, tel qu'un transistor MOSFET est, selon la stratégie adoptée, commandé par l'unité de commande et de contrôle de manière à court-circuiter le régulateur de tension en mode moteur électrique.

Le schéma de la figure 1 illustre l'alterno-démarreur selon le document FR-A-2 745 445. Pour plus de précisions sur la structure de l'alterno-démarreur on se reportera aux documents FR A 2 806 223 et FR A 2 807 231.

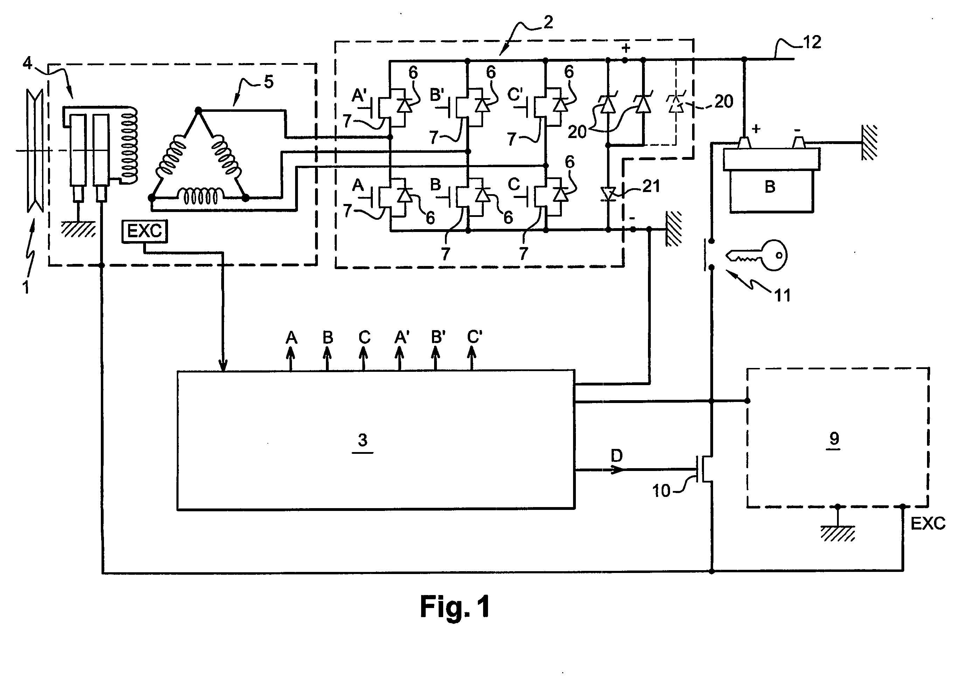

A la figure 1 on voit en 1 la poulie, en 4 le rotor à bobinage d'excitation, en 5 les bobinages des phases du stator connectés en triangle, en 2 le pont de commande (onduleur) et de redressement, en 3 l'unité électronique de commande et de contrôle, en 9 le régulateur de tension, en 10 l'interrupteur intervenant entre l'unité 3 et le régulateur 9, en B la batterie du véhicule et en 11 l'interrupteur associé à la clé de contact ou à une commande électronique à carte. EXC indique la ligne de liaison électrique entre le régulateur 9 ou l'unité 3 et le ou les bobinages d'excitation du rotor 4, tandis que l'on voit en 12 les moyens de liaison électrique au potentiel positif du réseau de bord du véhicule.

Les sorties des bobinages des phases 5 sont connectées au pont redresseur.

Les moyens de liaison 12 sont reliés à la borne positive de la batterie, ainsi que trois composants 6,7 (ligne + d'alimentation de la figure 1) du pont 2, les trois autres composants 6,7 du pont 2 étant reliés à la masse.

Plus précisément les références 6 et 7 représentent respectivement les diodes et les interrupteurs, ici sous la forme de transistors du type MOSFET, du pont de redressement et de commande intervenant entre la masse et la borne positive de la batterie B reliée également au potentiel positif du réseau de bord via les moyens 12. Selon cette technologie de semi-conducteur les diodes 6 sont intégrées aux transistors MOSFET 7. Il est associé à chaque phase deux transistors appartenant à une branche, appelée également bras, intervenant entre la sortie de phase concernée et respectivement la ligne d'alimentation électrique +, dite ligne positive, et la masse. A la figure 1 trois branches (bras) et donc trois paires de transistors de puissance sont prévues car l'alterno-démarreur est du type triphasé.

L'unité électronique de commande comporte également une unité électronique de gestion des dispositifs de pilotage précités, avantageusement sous la forme de circuits intégrés ainsi que l'unité électronique de gestion comportant un microcontrôleur, pour commander les transistors et envoyer sur la grille de ceux-ci les signaux A, B... pour rendre ces transistors passant ou ouvert; chaque dispositif de pilotage étant ici associé à deux signaux A,A'- B,B'- C,C'.

Cette unité de gestion reçoit les signaux provenant des capteurs de la position angulaire du rotor ou du résolveur. Ces signaux sont transmis aux dispositifs de pilotage, dits drivers, qui pilotent les transistors du type MOSFET. Les drivers comportent des entrées, notamment du type logique, pour la sélection du mode alternateur ou du mode moteur électrique et reçoivent de l'information de l'unité de gestion.

Normalement la batterie du véhicule, par l'intermédiaire de sa faible résistance interne, supprime les pics de tension qui se produisent dans le système électrique du véhicule comprenant les consommateurs branchés sur le réseau de bord.

Des câbles peuvent se rompre, des pertes de contact peuvent avoir lieu. Des délestages de charge peuvent donc se produire.

Il faut donc repenser la stratégie à adopter lors d'un délestage de charge, qui produit un phénomène de surtension appelé «load-dump» au niveau du pont de redressement 2.

Cette stratégie doit autoriser une alimentation des consommateurs qui ne sont pas déconnectés, et donc autoriser un fonctionnement du pont redresseur en mode dégradé.

Bien entendu le pont redresseur doit supporter ce mode dégradé sans dommage quelle que soit sa température initiale.

La tension du réseau de bord en cas de load dump ne doit bien entendu pas dépasser une certaine valeur, par exemple 35V pour une batterie de 14V.

Le phénomène de load dump doit avoir une durée limitée.

Pour résoudre ce problème de surtension, on peut utiliser des diodes écrêteuses 20, rajoutées sur le réseau de bord comme visible à la figure 1.

Ces diodes sont montées en parallèle et sont associées à une diode 21 de protection en cas d'un mauvais branchement ou montage des câbles de la batterie (inversion des câbles).

Cette solution est coûteuse et augmente la taille du pont.

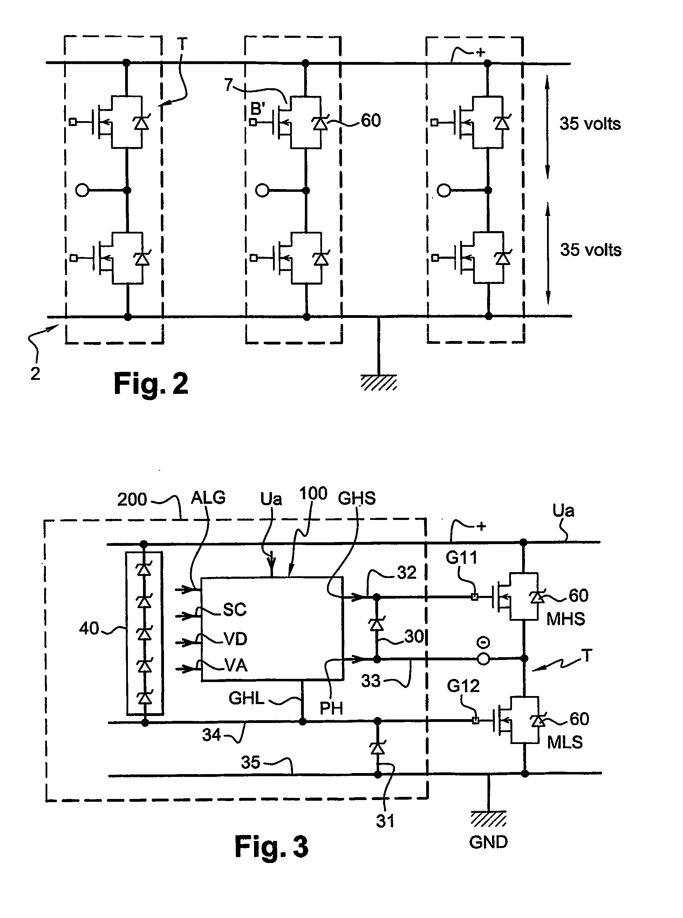

En variante, comme visible à la figure 2, on remplace avantageusement les diodes 6 de la figure 1 par des diodes écrêteuses 60 directement intégrées aux transistors du type MOSFET 7 du pont de redressement 2. Dans cette figure la référence T désigne l'une des branches du pont 2, dans laquelle est montée une paire de transistors connectés à l'une des sorties des bobinages de phase θ.

Ces diodes 60 limitent les surtensions à une valeur de tension d'écrêtage, par exemple, de 35 Volts maximum à leur borne. Cette tension est appelée de manière conventionnelle tension d'avalanche.

Les transistors 7 sont donc dotés d'un dispositif d'écrêtage des surtensions.

D'une manière générale, une surtension, notamment en cas de load-dump, peut être produite par l'alterno-démarreur lui-même. Cette surtension est limitée à cette valeur de tension d'écrêtage de 35V grâce aux dispositions à diodes écrêteuses précitées.

Par contre lorsque l'alterno-démarreur est à l'arrêt ou non excité (bobinage d'excitation du rotor non alimenté) des surtensions peuvent provenir du réseau de bord via la ligne positive +. En effet des moteurs électriques et/ou des relais sont branchés sur ce réseau de bord. Les relais s'ouvrent et se ferment. Une installation de dégivrage du pare-brise est également branchée sur le réseau de bord, ainsi que des consommateurs comportant des selfs.

Dans cette situation -alterno-démarreur à l'arrêt ou non excité- il peut arriver que les deux transistors d'une branche T soient à l'état ouvert en même temps, les diodes écrêteuses 60 étant actives.

Dans ce cas les deux diodes écrêteuses 60 des transistors sont en série.

Ainsi on peut écrêter dans une branche T à l'aide des transistors de la figure 2 au maximum une surtension égale à deux valeurs de tension d'écrêtage, soit dans ce cas 2 fois 35V = 70V, provenant du réseau de bord, la ligne +, appelée ligne positive, étant alors à 70V pendant la surtension.

Si cette surtension est appliquée à l'unité de commande et de contrôle, notamment aux dispositifs de pilotage de celle-ci, par exemple sous la forme de circuits intégrés réalisés en technologie monolithique basse tension, il faut changer de technologie et passer à une technologie haute tension plus coûteuse.

En effet par exemple pour une batterie de 14V et des transistors à diode écrêteuse d'une valeur de tension d'écrêtage de 35V maximum on ne peut pas utiliser une unité de commande et de contrôle réalisée en technologie de basse tension, dont la tension maximum acceptable est par exemple 50V, ce qui n'est pas compatible avec les 70V précités.

Il existe également des transistors dotés d'un dispositif d'écrêtage des surtensions, qui est actif pour des valeurs de tension d'écrêtage supérieure à 35V, par exemple de 60V. Dans ce cas, à plus forte raison, l'unité de commande et de contrôle doit être réalisée en technologie haute tension. Un autre dispositif de commande d'un alterno-démarreur polyphase est décrit dans le document US 6 353 307 B1.

### Objet de l'invention

La présente invention a pour objet de ménager en cas de surtension, de manière simple et économique, l'unité de commande sans avoir recourt à une technologie haute tension.

L'invention propose de doter le dispositif de commande de l'alterno-démarreur de dispositifs de protection contre les surtensions. Plus précisément on protège le ou les dispositifs de pilotage de chaque branche du pont à l'aide d'un dispositif de protection contre les surtensions, qui fonctionne à une valeur inférieure à la tension maximale acceptable par l'unité électronique de commande et de contrôle. Par exemple, ce seuil peut être compris entre 40 et 45 Volts ce qui est compatible avec la technologie basse tension de l'unité de commande et de contrôle supportant une tension légèrement supérieure, c'est à dire 50 volts. Ces technologies sont courantes, largement utilisées et donc bon marché.

Ainsi par exemple dans le cas de transistors dotés chacun d'un dispositif d'écrêtage des surtensions, qui est actif pour des valeurs ou seuils de tension d'écrêtage globalement de 35V, on protège le ou les dispositifs de pilotage de chaque branche à l'aide d'un dispositif de protection contre les surtensions, qui fonctionne à une tension inférieure à deux fois la valeur (le seuil) de tension d'écrêtage d'un transistor de redressement et de commande du pont, par exemple 70 volts pendant la surtension, en fermant, c'est-à-dire en rendant passant, au moins un transistor, de préférence celui connecté à la ligne de masse, quand la tension du réseau de bord dépasse un seuil légèrement supérieur à la valeur de la tension d'écrêtage du dispositif d'écrêtage d'un seul transistor. Par exemple, ce seuil peut être compris entre 40 et 45 Volts ce qui est compatible avec la technologie basse tension de l'unité de commande et de contrôle. La valeur de la tension de ce dispositif de protection pour laquelle celui-ci est actif est donc comprise entre la valeur de la tension d'écrêtage du dispositif d'écrêtage d'un transistor du pont et la valeur de la tension maximum acceptable par l'unité électronique de commande et de contrôle, elle-même inférieure à deux fois la valeur de tension d'écrêtage du dispositif d'écrêtage. Ainsi qu'on l'aura compris pour une surtension de 40 à 45V à la ligne positive, en fermant à l'aide du dispositif de protection le transistor relié à la ligne de masse, le potentiel de celui-ci devient de l'ordre de 5 à 10V, le potentiel de l'autre transistor étant globalement de 35V (valeur de la tension d'écrêtage).

Dans le cas de transistors dotés d'un dispositif d'écrêtage des surtensions, qui est actif pour des valeurs ou seuils de tension d'écrêtage supérieurs à la tension maximale acceptable par l'unité électronique de contrôle et de commande, par exemple pour une valeur de tension d'écrêtage de 60V, on protège le ou les dispositifs de pilotage de chaque branche à l'aide d'un dispositif de protection contre les surtensions, qui rend passant les deux transistors pour une tension, par exemple de 40 à 45 V, inférieure à la tension maximale acceptable par l'unité électronique de commande et de contrôle. Ces deux transistors sont alors à une tension inférieure à la tension d'écrêtage. Bien entendu on peut utiliser des transistors dépourvus de dispositifs d'écrêtage et pouvant travailler en série, grâce au dispositif de protection contre les surtensions, qui limite la tension sur la ligne positive à une valeur par exemple de l'ordre'de 40 à 45 V et qui est inférieure à la tension maximale acceptable par ladite unité.

Ainsi suivant l'invention un dispositif de commande d'un alterno-démarreur polyphasé et réversible associé à une batterie et à un réseau de bord, comportant, d'une part, un pont de redressement et de commande équipé d'interrupteurs sous la forme de transistors de puissance présentant chacun une grille et d'autre part, une unité électronique de commande et de contrôle dotée de dispositifs de pilotage des grilles des transistors de puissance pour rendre ceux-ci passant ou ouvert, dans lequel les transistors connectés à une même sortie de phase sont groupés par paire dans une branche dudit pont et pilotés par au moins un dispositif de pilotage, la dite branche étant connectée à une ligne de masse et à d'une ligne d'alimentation, dite ligne positive, reliée au potentiel positif du réseau de bord et de la batterie, est caractérisé en ce qu'un dispositif de protection contre les surtensions est associé au dispositif de pilotage d'une paire de transistor de puissance d'une branche et en ce que le dispositif de protection contre les surtensions est configuré pour rendre passant l'un au moins des transistors de la dite branche lorsque le potentiel de la ligne positive dépasse une valeur déterminée ou prédéterminée inférieure à la valeur de la tension maximale acceptable par l'unité électronique de commande et de contrôle.

Grâce à cette disposition l'unité électronique de commande et de contrôle peut être réalisée en technologie basse tension.

Dans une forme de réalisation le dispositif de commande sus-indiqué, équipé d'interrupteurs sous la forme de transistors de puissance présentant chacun une grille est caractérisé en ce que les dits transistors présentent également un dispositif d'écrêtage des surtensions provenant d'une ligne d'alimentation, dite ligne positive, reliée au potentiel positif du réseau de bord et de la batterie, en ce que le dispositif d'écrêtage des surtensions est actif pour une tension de valeur déterminée ou prédéterminée, dite valeur de tension d'écrêtage, en ce que la tension maximale acceptable par ladite unité électronique est comprise entre une fois et deux fois la valeur de tension d'écrêtage, et en ce que le dispositif de protection contre les surtensions est configuré pour rendre passant l'un au moins des transistors de la dite branche lorsque le potentiel de la ligne positive dépasse une valeur déterminée ou prédéterminée, d'une part, comprise entre une fois et deux fois la valeur de tension d'écrêtage et d'autre part, inférieure à la valeur de la tension maximale acceptable par l'unité électronique de commande et de contrôle.

Dans une autre forme de réalisation le dispositif de commande du type sus-indiqué, est caractérisé en ce que les deux transistors sont adaptés à travailler en série pour une tension sur la ligne positive supérieure à la tension maximale acceptable par ladite unité électronique, et en ce que le dispositif de protection contre les surtensions est configuré pour rendre passant les deux transistors de la dite branche lorsque le potentiel de la ligne positive dépasse une valeur déterminée ou prédéterminée voisine de la tension maximale acceptable par l'unité électronique de commande et de contrôle en étant inférieure à celle-ci.

Les interrupteurs dudit pont, sous la forme de transistors de puissance, présentent chacun également un dispositif d'écrêtage des surtensions provenant de ladite ligne d'alimentation positive actif pour une tension de valeur déterminée ou prédéterminée, dite valeur de tension d'écrêtage, supérieure à la tension maximale acceptable par l'unité électronique de commande et de contrôle.

Dans une forme de réalisation, de manière simple et économique, le dispositif de protection contre les surtensions est intégré au dispositif de pilotage concerné en sorte qu'il est connecté à celui-ci.

Cela permet de réduire la longueur des connexions et l'encombrement.

Ce dispositif est, dans un mode de réalisation, connecté à la ligne d'alimentation positive et, par exemple via une ligne de liaison électrique, à la grille du transistor de la branche reliée à la ligne de masse.

Ce dispositif comporte au moins une diode écrêteuse.

Il comprend avantageusement de manière économique plusieurs diodes Zener de faible puissance montées en série ou des diodes écrêteuses fonctionnant par effet d'avalanche.

En variante le dispositif comporte un comparateur ou un amplificateur opérationnel pour comparer la tension de la ligne positive à une valeur de référence afin de commander la grille au moins de l'un des transistor pour rendre celui-ci prioritairement passant, le transistor étant alors fermé.

De préférence, pour diminuer la longueur des connexions et diminuer les perturbations, le dispositif de pilotage à dispositif de protection selon l'invention est implanté à proximité d'une branche.

On peut ainsi former pour chaque phase un module de puissance protégé contre les surtensions en cas de délestage de charge et en cas de surtension provenant du réseau de bord.

Ce module est dans un mode de réalisation porté par le palier arrière de l'alterno-démarreur en étant implanté à proximité des sorties des phases.

Les modules des phases sont avantageusement associés à un dissipateur de chaleur à ailettes de refroidissement comportant une première face sur laquelle sont montés les modules électroniques de puissance et une deuxième face orientée vers le palier arrière. Le dissipateur, formant support des modules, est par exemple fixé sur le palier arrière à l'aide de plots issus du palier arrière ou de tout autre moyen formant entretoise entre le palier arrière et le dissipateur. L'ensemble pont dissipateur protégé est bien refroidi car il forme de manière générale une mezzanine fixée sur le palier arrière comme décrit dans le document FR 02 13431 déposé le 28/10/2002.

Avantageusement chaque interrupteur d'une branche du pont de redressement comporte plusieurs transistors montés en parallèle pour autoriser le passage d'un courant plus important en mode moteur électrique, notamment lors du démarrage du moteur thermique du véhicule.

Toutes les caractéristiques énoncées ci-dessus sont à considérer de manière isolée et/ou en combinaison.

### Brève description des dessins

La description qui va suivre illustre l'invention en regard des dessins annexés dans lesquels :
- la figure 1 est une vue schématique d'un alternateur de l'art antérieur ;
- la figure 2 est une vue schématique d'un pont de redressement, analogue à celui de la figure 1, dans lequel des diodes écrêteuses sont associées aux transistors du pont ;
- la figure 3 est une vue schématique montrant l'un des bras du pont et son dispositif de pilotage, appelé driver, associé à un dispositif d'écrêtage selon l'invention.

### Description d'exemples préférés de réalisation de l'invention

Dans la figure 3 les éléments communs avec ceux des figures 1 et 2 seront affectés des mêmes signes de référence.

Dans cette figure on voit qu'une partie du dispositif de commande d'un alterno-démarreur pour véhicule automobile du type triphasé. Plus précisément on a représenté qu'une branche du pont et que l'un des dispositifs de pilotage de l'unité de commande et de contrôle. Ainsi qu'on le sait les branches du pont redresseur et de commande sont identiques ainsi que les dispositifs de pilotage en sorte qu'il n'est pas besoin de tous les représenter.

Dans cette figure 3 on voit en T l'une des branches du pont redresseur, en 60 une diode écrêteuse intégrée à chaque transistor de la branche pour constituer un dispositif d'écrêtage des surtensions notamment en cas de délestage de charges, en θ l'une des sorties des phases du stator dotées de bobinages, en + la ligne d'alimentation électrique, dite ligne positive, reliée au potentiel positif du réseau de bord et au potentiel positif de la batterie, à savoir la borne positive de celle-ci.

GND désigne le potentiel de la ligne de masse 35 et de la masse.

Deux transistors de puissance MHS et MLS sont groupés par paire dans la branche T et connectés à la même sortie de phase θ. Avantageusement chaque transistor est un ensemble de transistors montés en parallèle pour mieux véhiculer le courant en mode moteur électrique.

Comme décrit dans le document FR 02 08420 déposé le 04/07/2002, auquel on se reportera pour plus de précisions, un dispositif de pilotage 100, appelé driver, est monté a proximité des transistors MHS et MLS en étant connecté à ceux-ci de manière décrite ci-après.

Ce driver, appartient, comme visible dans la figure 2 du document FR 02 08420, à l'unité de contrôle et de commande comportant une unité électronique de gestion pour commander les drivers. Cette unité est dotée d'un microcontrôleur, qu'il convient de protéger contre les surtensions ainsi que les drivers. Cette unité consiste en un ou plusieurs circuits intégrés, avantageusement sous la forme de circuits monolithiques basse tension.

Suivant une caractéristique la tension maximale acceptable par la dite unité électronique, c'est-à-dire sans endommagement ou destruction de celle-ci, est supérieure à la valeur de la tension d'écrêtage du dispositif d'écrêtage d'un transistor et inférieure à deux fois cette valeur de tension d'écrêtage. Par exemple pour une batterie de 14V et une valeur de tension d'écrêtage de 35V, la tension acceptable est de 40 à 45V. Par sécurité on peut augmenter celle-ci par exemple à 50V en restant dans une technologie basse tension. Ici chaque branche de transistors MHS et MLS et le driver qui la pilote sont connectés à proximité de la sortie de phase θ. Ces transistors sont avantageusement des transistors à effet de champ, ici du type MOSFET, et, de manière précitée, les diodes écrêteuses 60 sont intégrées dans ces transistors.

Plus précisément MHS est le transistor « high side », tandis que le transistor MLS est le transistor « low side ».

Le transistor MHS est connecté à la sortie θ de la phase concernée et à la ligne d'alimentation +.

Le transistor MLS est connecté à la à la sortie θ de la phase concernée et à la ligne de masse 35.

Dans ce mode de réalisation le driver forme un module de puissance avec les transistors MHS et MLS de la branche T à laquelle il est associé. Ce driver est propre à agir sur les grilles G11 et G12 des transistors pour les rendre passants (transistor fermé) ou bloqués (transistor ouvert).

Le dispositif de commande de l'alterno-démarreur comporte donc des modules de puissance et une unité électronique de gestion dotée d'un microcontrôleur.

Ainsi les transistors de puissance du pont, constituant des interrupteurs du type statique, et les drivers appartiennent à un étage de puissance, tandis que l'unité de gestion appartient à un second étage de plus faible puissance.

Avantageusement l'unité de gestion est connectée à tous les dispositifs de pilotage dits drivers.

Ces modules de puissance sont, dans un mode de réalisation portés par l'alterno-démarreur, plus précisément par le palier arrière de celui-ci.

L'unité de gestion est dans ce cas montée soit à l'extérieur, soit sur l'alterno-démarreur. Cette unité est donc proche ou éloignée des drivers.

Les drivers reçoivent d'un côté des signaux provenant de l'unité de gestion'.

L'un des signaux reçus ALG est l'alimentation dite '' boost", qui est la tension d'alimentation fournie par une source de tension auxiliaire aux grilles G11 et G12 des transistors MHS et MLS car ceux-ci sont avantageusement de manière économique du type canal N. Le driver reçoit également, de l'unité de gestion, des signaux SC, qui sont des informations fournies par le résolveur ou les capteurs de position du rotor de l'alterno-démarreur pour indiquer position angulaire du rotor de la machine électrique tournante. L'unité de gestion fournit également au driver une information, ici du type logique, de validation VD du mode moteur électrique, notamment en mode démarreur du moteur thermique du véhicule, et une information VA de validation du mode alternateur. Ces deux derniers signaux permettent au driver de savoir si l'alterno-démarreur doit travailler, à un instant précis, comme un alternateur ou comme moteur électrique.

Chaque driver de l'autre côté reçoit et transmet des signaux aux transistors MHS et MLS. Le driver reçoit le potentiel d'alimentation de l'alterno-démarreur, à savoir le potentiel de l'alimentation du réseau de bord (ligne positive +). Il reçoit également une information qui est l'entrée de mesure du potentiel de cette ligne +. Le driver fournit en sortie un signal GHS, qui est le signal de commande de la grille G11 du transistor MHS. Le driver reçoit aussi la sortie de phase θ provenant de l'alterno-démarreur ainsi que la mesure du potentiel de la sortie de phase. Le driver fournit aussi en sortie la commande GLS de la grille G12 du transistor MLS. Enfin, le driver reçoit le potentiel GND de la masse, ainsi que la mesure du potentiel de la masse.

Ce driver comporte également deux comparateurs ou amplificateurs opérationnels délivrant à sa sortie un signal logique comme décrit par exemple dans le document EP A 1 134 886. Ici le premier comparateur est connecté entre les entrées des mesures du potentiel de le ligne + et de la mesure de la sortie de phase, tandis que le second comparateur est connecté entre les entrées de la mesure du potentiel de la masse et de la mesure de la sortie de phase.

Le signal de sortie du premier comparateur fournit une valeur de comparaison entre les deux valeurs des entrées des mesures concernées précitées

Il en est de même en ce qui concerne le deuxième comparateur. Ces valeurs de comparaison sont ensuite traitées numériquement par un circuit logique pour en déduire si c'est la grille G11 du transistor MHS et/ou la grille G12 du transistor MHL doivent être fermées et/ou ouvertes. Les grilles G11 et G12 des transistors de puissance respectifs MHS et MHL sont chargés et déchargés par des sources de courant, respectivement une première et une deuxième source de courant. Chacune de ces deux sources de courant est réalisée ici à partir de deux transistors.

L'entrée ALG du driver pour l'alimentation « boost » est toujours active et est à un potentiel élevé, délivré par l'unité de gestion pour charger correctement la grille des transistors de puissance MHS et MLS du type canal N, par l'intermédiaire des deux sources de courant. Ce potentiel peut être, par exemple égal à Ua + 16 Volts (Ua étant la tension à la borne positive de la batterie).

Le fonctionnement du driver est le suivant : en mode moteur électrique, notamment en mode démarreur, un résolveur ou des capteurs de position, solidaires en rotation du rotor de l'alterno-démarreur qui travaille en machine synchrone, repèrent la position angulaire du rotor. Les signaux capteurs sont transmis à l'unité de gestion, qui les traite et les applique à l'entrée concernée SC du driver. Les grilles des transistors MHS et MHL sont commandées en fonction des signaux reçus sur cette entrée, par l'intermédiaire du circuit logique et des deux sources de courant.

En mode alternateur, les transistors de puissance MHS et MHL fonctionnent en redressement synchrone, c'est-à-dire que les deux comparateurs précités détectent le niveau de phase sur l'entrée de la mesure du signal de phase, par rapport au potentiel de masse sur l'entrée de la mesure du potentiel de la masse GND et au potentiel de sortie sur l'entrée de la mesure du potentiel de la ligne +. Le résultat de cette comparaison est appliqué aux grilles de ces transistors par l'intermédiaire du circuit logique et des sources de courants.

Le mode alternateur ou le mode moteur électrique est sélectionné sur le driver par les entrées logiques concernées VD et VA reliées au circuit logique. Par exemple, lorsque le mode alternateur est sélectionné, l'une des entrées VA reçoit un signal logique égal à 1 et l'autre entrée VD un signal égal à 0. Et inversement lorsque le mode moteur électrique, notamment le mode démarreur, est sélectionné. Le niveau logique 1 est, par exemple, une tension de 5 volts et le niveau logique 0 une tension nulle.

Bien entendu en variante on utilise que le signal de VD, dont le niveau logique permet de sélectionner à lui seul le mode moteur électrique ou le mode alternateur.

Par simplicité à la figure 3 de la présente invention on n'a pas représenté toutes les entrées, les comparateurs, le circuit logique et les sources de courant des figures 3 et 4 du document FR 02 08420 auquel on se reportera pour plus de précisions.

Pour mémoire on rappellera que de manière avantageuse chaque driver est situé à proximité de ses transistors associés MHS et MLS, ce qui permet d'utiliser des connexions de longueur réduite et ce qui diminue d'autant la sensibilité de ces entrées par rapport aux perturbations pouvant transiter par ces connexions.

Par contre, l'unité de gestion peut être éloignée des drivers car elle ne transmet que des potentiels peu critiques contrairement aux entrées de mesure précitées et c'est pour cette raison qu'elle n'est pas représentée.

Ainsi dans cette figure 3 on n'a représenté que les éléments nécessaires à l'invention, notamment les moyens de liaison électriques 32 à 35, appelés lignes.

Les grilles G11, G12 des transistors MHS, MHL sont protégées par des diodes respectivement 30 et 31, ici du type à avalanche.

La diode 30 est connectée électriquement à la ligne de grille 32, reliant la grille G11 à l'entrée GHS, et à la ligne de sortie de phase 33 reliant la sortie de phase θ à l'entrée concernée PH du driver 100.

La diode 31 est connectée électriquement à la ligne de grille 34, reliant la grille G12 à l'entrée GHL, et à la ligne de masse 35, qui est au potentiel de masse GND.

Des surtensions peuvent provenir du réseau de bord via la ligne + d'alimentation positive lorsque l'alterno-démarreur est à l'arrêt ou n'est pas excité.

Dans cette situation les deux transistors MHS et MLS peuvent être à l'état ouvert, c'est-à-dire bloqué.

Les diodes écrêteuses 60 limitent les surtensions par exemple à une valeur (un seuil) de tension d'écrêtage de 35V par transistor.

Les surtensions du réseau de bord transitant par la ligne positive + sont alors limitées à 70V par les diodes 60, car ces transistors et ces diodes sont alors montés en série, aucun signal n'étant présent à la sortie de phase θ.

Afin de limiter ces surtensions du réseau de bord à une valeur inférieure pour ménager l'unité électronique et notamment le driver 100, selon l'invention on prévoit, de manière simple et économique, un dispositif de protection contre les surtensions 40, qui proviennent notamment du réseau de bord. Ce dispositif 40 est associé au driver 100 de façon à fermer, c'est-à-dire à rendre passant, prioritairement l'un au moins des transistors MHS et MHL lorsque le potentiel de la ligne + (potentiel Ua et potentiel positif du réseau de bord) dépasse une valeur déterminée ou prédéterminée inférieure à la valeur de la tension maximale acceptable par l'unité électronique de commande et de contrôle, c'est-à-dire une valeur ou seuil, qui ne détériore pas et/ou qui n'endommage pas cette unité.

Dans l'exemple de réalisation cette valeur déterminée ou prédéterminée est supérieure à la valeur de la tension d'écrêtage d'une diode 60 et inférieure à deux fois cette valeur de tension d'écrêtage.

Par exemple pour une valeur de tension d'écrêtage ou seuil de tension d'écrêtage de 35V on choisit, de manière précitée, une valeur comprise entre 40 et 45V acceptable par l'unité électronique pour rester en technologie monolithique basse tension, qui peut supporter au maximum globalement 50V.

Ainsi le driver 100 est construit pour supporter 50V soit une tension maximale comprise entre une et deux fois la valeur de tension d'écrêtage.

Avantageusement, pour notamment réduire le nombre de connexions et réduire les perturbations, ce dispositif de protection 40 du driver 100 contre les surtensions du réseau de bord du véhicule automobile, est connecté directement au driver en étant intégré dans le circuit monolithique basse tension du driver.

Ainsi on a représenté en 200 à la figure 3 ce circuit intégré du type monolithique.

En variante le dispositif de protection est intégré à l'étage de plus faible puissance de l'unité de gestion et est connecté à l'un au moins des transistors, avantageusement à la grille de celui-ci soit directement , soit via le driver 100.

Dans une forme de réalisation ce dispositif 40 consiste un ensemble de diodes écrêteuses connectées en série, qui relient électriquement le potentiel de la ligne positive + à la grille G12 du transistor MLS de sorte que le transistor MLS connecté à la masse se ferme de façon prioritaire quand le potentiel de la ligne +, dépasse une valeur déterminée par exemple comprise entre 40 et 45 Volts suite à une surtension provenant du réseau de bord. Les diodes en série peuvent être de faible puissance et consister en des diodes du type Zener car ce sont les transistors MLS et MHS qui supportent l'énergie de l'écrêtage. A la figure 3, cinq diodes Zener sont prévues. En variante on peut réduire le nombre de diodes selon les applications et/ou choisir des diodes écrêteuse travaillant à une tension plus élevée par effet d'avalanche. En variante une seule diode écrêteuse est prévue. En variante les diodes en série 40 peuvent être remplacées par un comparateur ou un amplificateur opérationnel, qui compare le potentiel de la ligne + par rapport à une référence de tension. Lorsque le potentiel de la ligne positive est globalement égal à cette tension de référence on agit sur la grille de l'un des transistors pour fermer celui-ci.

Plus généralement, le résultat de cette comparaison peut agir au moins sur l'un quelconque des transistors de puissance MHS ou MLS.

Bien entendu ces valeurs déterminées ou prédéterminées dépendent des applications, notamment de la tension de la batterie, ici régulée à 14V.

Ainsi qu'il ressort à l'évidence de la description et des dessins, dans ce mode de réalisation, le dispositif de protection 40 rend passant l'un des transistors pour une valeur de tension inférieure à la tension maximale acceptable par l'unité électronique de commande et de contrôle.

Bien entendu la présente invention n'est pas limitée aux exemples de réalisation décrits.

Ainsi en variante le dispositif de protection 40 est connecté directement à la grille G12.

En variante un driver est associé à chaque transistor. Cette disposition est moins avantageuse car elle conduit à multiplier les connexions.

Dans ce cas les signaux de commande GHL et GLS sont fournis respectivement par l'un et l'autre des drivers. Chaque driver reçoit les signaux SC,VD,VA. Bien entendu, de manière précitée, on peut supprimer le signal VA.

D'une manière générale le dispositif de protection agit sur l'un au moins des deux transistors de la branche pour le rendre passant et est connecté à au moins un driver.

Le dispositif peut agir sur les deux transistors.

Dans ce cas on peut utiliser des transistors MHS et MLS pouvant travailler en série pour des tensions supérieures à la tension maximale acceptable par l'unité électronique de commande et de contrôle.

Dans ce cas le dispositif de protection est configuré pour rendre passant les deux transistors dés que la tension sur la ligne + est voisine de la dite tension maximale en étant inférieure à celle-ci.

On peut agir sur les grilles de ceux-ci à l'aide dispositif de protection comportant de manière précitée un comparateur ou un amplificateur opérationnel pour comparer le potentiel de la ligne positive (+) à une tension de référence.

Par exemple pour une tension maximale de 50V acceptable par ladite unité électronique, on rend passant les deux transistors pour une tension sur la ligne positive de 40 à 45 V. Ces transistors sont alors dans un mode de réalisation dotés chacun d'un dispositif d'écrêtage actif pour une valeur supérieure à ces 40 à 45V.

En variante les deux transistors configurés de manière précitée sont dépourvus de dispositif écrêteur en leur sein.

En variante les transistors à effet de champ sont du type canal p.

L'unité de gestion, les drivers et le pont redresseur et de commande sont dans un autre mode de réalisation montés dans un même boîtier électronique comportant deux étages.

Ce boîtier est, dans un mode de réalisation, monté à l'extérieur de l'alterno-démarreur avec intervention de moyens de liaison électrique entre l'alterno-démarreur et le boîtier. Ces moyens de liaison comportent par exemple une liaison à connecteurs et câbles électriques décrite par exemple dans le document WO 02/060038.

En variante le boîtier électronique est porté par l'alterno-démarreur en étant par exemple porté par la périphérie externe du carter de celui-ci.

En variante le pont redresseur et/ou le régulateur de tension sont portés par le palier arrière de l'alterno-démarreur tandis que l'unité de commande et de contrôle est implantée à l'extérieur.

Bien entendu chaque transistor du type MOSFET est dans un mode de réalisation constitué par un ensemble de transistors montés en parallèle pour notamment réduire les échauffements.

En variante l'alterno-démarreur comporte plus de trois phases, par exemple cinq ou six phases, et/ou deux ponts en parallèle.

Le nombre de dispositifs de pilotage est dans ce cas supérieur à trois, à raison d'au moins un driver par branche.

Cela est rendu possible du fait de la formation de modules de puissance protégés comprenant une paire de transistors et un driver de manière précitée.

Le dispositif de protection d'un transistor contre les surtensions en cas de délestage de charge peut avoir différentes formes. Par exemple les transistors peuvent être calibrés en tension pour travailler par effet d'avalanche pour une tension calibrée inférieure à une tension déterminée ou prédéterminée en cas de délestage de charge.

Tout dispositif travaillant par effet d'avalanche étant utilisable, ce dispositif étant avantageusement intégré au transistor.

Bien entendu les transistors peuvent être associés à un dispositif de démagnétisation rapide de l'alternateur pour limiter la durée de la phase de Load-dump et donc de réduire l'énergie que devront supporter les transistors. Un tel dispositif est décrit par exemple dans le document FR A 2 802 365 auquel on se reportera pour plus de précisions. Un tel dispositif de démagnétisation rapide est plus particulièrement avantageux lorsque l'interrupteur est constitué d'un seul ou d'un nombre réduit de transistors en parallèles car ceux-ci devront supporter l'énergie du load-dump.

## Revendications

1. Dispositif de commande d'un alterno-démarreur polyphasé et réversible associé à une batterie et à un réseau de bord, comportant, d'une part, un pont équipé d'interrupteurs sous la forme de transistors de puissance (MHS, MHL) présentant chacun une grille (G11, G12) et d'autre part, une unité électronique de commande et de contrôle dotée de dispositifs de pilotage (100) des grilles des transistors de puissance pour rendre ceux-ci passant ou ouvert, dans lequel lesdits transistors connectés à une même sortie de phase sont groupés par paire dans une branche (T) dudit pont et pilotés par au moins un dispositif de pilotage (100), et dans lequel la dite branche est connectée à une ligne de masse (35) et à une ligne d'alimentation(+), dite ligne positive, reliée au potentiel positif du réseau de bord et de la batterie, **caractérisé en ce qu'**un dispositif de protection (40) contre les surtensions est associé au dispositif de pilotage (100) d'une paire de transistors de puissance d'une branche (T), et **en ce que** le dispositif de protection (40) est configuré pour rendre passant l'un au moins des transistors de la dite branche lorsque le potentiel de la ligne positive dépasse une valeur déterminée ou prédéterminée inférieure à la valeur de la tension maximale acceptable par l'unité électronique de commande et de contrôle.

2. Dispositif selon la revendication 1, **caractérisé en ce que** le dispositif de protection (40) est intégré au dispositif de pilotage (100).

3. Dispositif selon la revendication 1 ou 2, **caractérisé en ce qu'**un unique dispositif de pilotage (100) est associé à la paire de transistors de la branche (T) et est monté à proximité de cette paire de transistors.

4. Dispositif selon l'une quelconque des revendications précédentes, **caractérisé en ce que** le dispositif de pilotage (100) comporte un circuit logique pour piloter les grilles de la paire des transistors de la branche (T).

5. Dispositif selon l'une quelconque des revendications précédentes, **caractérisé en ce que** les interrupteurs dudit pont, sous la forme de transistors de puissance (MHS, MHL), présentent chacun également un dispositif d'écrêtage (60) des surtensions provenant de ladite ligne d'alimentation(+), **en ce que**, d'une part, le dispositif d'écrêtage des surtensions (60) est actif pour une tension de valeur déterminée ou prédéterminée, dite valeur de tension d'écrêtage, et d'autre part, la tension maximale acceptable par l'unité électronique de commande et de contrôle est comprise entre une fois et deux fois la valeur de tension d'écrêtage, et **en ce que** le dispositif de protection (40) est configuré pour rendre passant l'un au moins des transistors de ladite branche lorsque le potentiel de la ligne positive dépasse une valeur déterminée ou prédéterminée, d'une part, comprise entre une fois et deux fois la valeur de tension d'écrêtage et d'autre part, inférieure à la valeur de la tension maximale acceptable par l'unité électronique de commande et de contrôle.

6. Dispositif selon l'une quelconque des revendications 1 à 4, **caractérisé en ce que** les transistors de puissance (MHS, MHL) d'une même branche sont adaptés à travailler en série pour une tension sur la ligne positive supérieure à la tension maximale acceptable par l'unité électronique de commande et de contrôle et **en ce que** le dispositif de protection (40) est configuré pour rendre passant les deux transistors de ladite branche lorsque le potentiel de la ligne positive dépasse une valeur déterminée ou prédéterminée voisine de la valeur de la tension maximale acceptable par l'unité électronique de commande et de contrôle en étant inférieure à celle-ci.

7. Dispositif selon la revendication 6, **caractérisé en ce que** les interrupteurs dudit pont, sous la forme de transistors de puissance (MHS, MHL), présentent chacun également un dispositif d'écrêtage (60) des surtensions provenant de ladite ligne d'alimentation (+) actif pour une tension de valeur déterminée ou prédéterminée, dite valeur de tension d'écrêtage, supérieure à la tension maximale acceptable par l'unité électronique de commande et de contrôle.

8. Dispositif de pilotage selon l'une quelconque des revendications précédentes, **caractérisé en ce que** le dispositif de protection (40) est connecté à la ligne positive (+) et à la grille de l'un des transistors de la branche (T).

9. Dispositif selon l'une quelconque des revendications précédentes, **caractérisé en ce que** le dispositif de protection (40) comporte au moins une diode écrêteuse (40) reliant électriquement la ligne positive (+) à une ligne d'une grille (G12) du transistor de puissance (MHL) de la branche connecté à la ligne de masse (35).

10. Dispositif selon la revendication 9, **caractérisé en ce que** le dispositif de protection (40) comporte plusieurs diodes écrêteuses du type Zener ou à avalanche montées en série.

11. Dispositif selon l'une quelconque des revendications 1 à 8, **caractérisé en ce que** le dispositif de protection (40) comporte un comparateur ou un amplificateur opérationnel pour comparer le potentiel de la ligne positive (+) à une tension de référence.

12. Dispositif selon l'une quelconque des revendications précédentes, **caractérisé en ce que** les transistors (MHS, MLS) sont du type MOSFET et sont calibrés en tension pour travailler par effet d'avalanche pour une tension calibrée inférieure à une tension déterminée ou prédéterminée en cas de délestage de charge.

13. Dispositif selon l'une quelconque des revendications précédentes, **caractérisé en ce que** le dispositif d'écrêtage (60) consiste en une diode écrêteuse.

## Claims

1. Control device for a multi-phase reversible alternator/starter associated with a battery and an onboard system, comprising on the one hand a bridge equipped with switches in the form of power transistors (MHS, MHL) each having a gate (G11, G12) and on the other hand an electronic control and actuation unit provided with devices (100) for controlling the gates of the power transistors in order to make the latter conductive or open, in which the said transistors, connected to one and the same phase output, are grouped together in pairs in a branch (T) of the said bridge and controlled by at least one control device (100), and in which the said branch is connected to an earth line (35) and to a supply line (+), referred to as the positive line, connected to the positive potential of the onboard system and of the battery, **characterised in that** a device (40) protecting against overvoltages is associated with the control device (100) for a pair of power transistors in a branch (T), and **in that** the protection device (40) is configured so as to make at least one of the transistors in the said branch conductive when the potential of the positive line exceeds a given or predetermined value less than the value of the maximum voltage acceptable to the electronic control and actuation unit.

2. Device according to claim 1, **characterised in that** the protection device (40) is integrated in the control device (100).

3. Device according to claim 1 or 2, **characterised in that** a single control device (100) is associated with the pair of transistors in the branch (T) and is mounted close to this pair of transistors.

4. Device according to any one of the preceding claims, **characterised in that** the control device (100) comprises a logic circuit for controlling the gates of the pair of transistors in the branch (T).

5. Device according to one of the preceding claims, **characterised in that** the switches in the said bridge, in the form of power transistors (MHS, MHL), each also have a device (60) for clipping overvoltages coming from the supply line (+), **in that** on the one hand the overvoltage clipping device (60) is active for a voltage of a given or predetermined value, referred to as the clipping voltage value, and on the other hand the maximum voltage acceptable to the electronic control and actuation unit lies between the clipping voltage value and twice that value, and **in that** the protection device (40) is configured so as to make at least one of the transistors in the said branch conductive when the potential of the positive line exceeds a given or predetermined value, on the one hand lying between the clipping voltage value and twice that value and on the other hand less than the value of the maximum voltage acceptable to the electronic control and actuation unit.

6. Device according to any one of claims 1 to 4, **characterised in that** the power transistors (MHS, MHL) in the same branch are adapted to work in series for a voltage on the positive line greater than the maximum voltage acceptable to the electronic control and actuation unit and **in that** the protection device (40) is configured so as to make the two transistors in the said branch conductive when the potential of the positive line exceeds a given or predetermined value close to the value of the maximum voltage acceptable to the electronic control and actuation unit whilst being less than it.

7. Device according to claim 6, **characterised in that** the switches in the said bridge, in the form of power transistors (MHS, MHL), each also have a device (60) for clipping the overvoltages coming from the said supply line (+) active for a given or predetermined voltage value referred to as the clipping voltage value, above the maximum voltage acceptable to the electronic control and actuation unit.

8. Control device according to any one of the preceding claims, **characterised in that** the protection device (40) is connected to the positive line (+) and to the gate of one of the transistors in the branch (T).

9. Device according to any one of the preceding claims, **characterised in that** the protection device (40) comprises at least one clipping diode (40) electrically connecting the positive line (+) to a line of a gate (G12) of the power transistor (MHL) in the branch connected to the earth line (35).

10. Device according to claim 9, **characterised in that** the protection device (40) comprises several clipping diodes of the Zener or avalanche type connected in series.

11. Device according to any one of claims 1 to 8, **characterised in that** the protection device (40) comprises a comparator or an operational amplifier for comparing the potential of the positive line (+) with a reference voltage.

12. Device according to any one of the preceding claims, **characterised in that** the transistors (MHS, MLS) are of the MOSFET type and are voltage calibrated so as to work by avalanche effect for a calibrated voltage less than a given or predetermined voltage in the event of load shedding.

13. Device according to any one of the preceding claims, **characterised in that** the clipping device (60) consists of a clipping diode.

## Patentansprüche

1. Steuereinrichtung für einen mit einer Batterie und einem Bordnetz verbundenen mehrphasigen und reversiblen Anlassergenerator, der einerseits eine Brücke mit Schaltern in Form von Leistungstransistoren (MHS, MHL), die jeweils ein Gate (G11, G12) aufweisen, und andererseits eine elektronische Steuer- und Kontrolleinheit mit Ansteuervorrichtungen (100) zur Ansteuerung der Gates der Leistungstransistoren umfasst, um diese durchzuschalten oder in den geöffneten Zustand zu schalten, wobei die an ein und denselben Phasenausgang angeschlossenen Transistoren paarweise in einem Strang (T) der besagten Brücke gruppiert sind und durch wenigstens eine Ansteuervorrichtung (100) angesteuert werden und wobei der besagte Strang an eine Masseleitung (35) und an eine als Plusleitung bezeichnete Speiseleitung (+) angeschlossen ist, die mit einem positiven Potential des Bordnetzes und der Batterie verbunden ist, **dadurch gekennzeichnet, dass** eine Schutzvorrichtung (40) zum Schutz gegen Überspannungen der Ansteuervorrichtung (100) eines Leistungstransistorenpaars eines Strangs (T) zugeordnet ist und dass die Schutzvorrichtung (40) so gestaltet ist, dass sie wenigstens einen der Transistoren des besagten Strangs durchschaltet, wenn das Potential der Plusleitung einen bestimmten oder vorbestimmten Wert überschreitet, der kleiner als der Wert der maximal zulässigen Spannung für die elektronische Steuer- und Kontrolleinheit ist.

2. Einrichtung nach Anspruch 1, **dadurch gekennzeichnet, dass** die Schutzvorrichtung (40) in die Ansteuervorrichtung (100) integriert ist.

3. Einrichtung nach Anspruch 1 oder 2, **dadurch gekennzeichnet, dass** dem Transistorenpaar des Strangs (T) eine einzige Ansteuervorrichtung (100) zugeordnet und in unmittelbarer Nähe dieses Transistorenpaars angebracht ist.

4. Einrichtung nach einem der vorangehenden Ansprüche, **dadurch gekennzeichnet, dass** die Ansteuervorrichtung (100) eine Logikschaltung umfasst, um die Gates des Transistorenpaars des Strangs (T) anzusteuern.

5. Einrichtung nach einem der vorangehenden Ansprüche, **dadurch gekennzeichnet, dass** die Schalter der besagten Brücke in Form von Leistungstransistoren (MHS, MHL) jeweils eine Begrenzungsvorrichtung (60) zur Begrenzung der aus der besagten Speiseleitung (+) kommenden Überspannungen aufweisen, dass einerseits die Vorrichtung zur Begrenzung der Überspannungen (60) bei einer Spannung mit einem als Begrenzungsspannungswert bezeichneten bestimmten oder vorbestimmten Wert aktiv ist und andererseits die maximal zulässige Spannung für die elektronische Steuer- und Kontrolleinheit zwischen dem Einfachen und dem Zweifachen des Begrenzungsspannungswerts liegt und dass die Schutzvorrichtung (40) so gestaltet ist, dass sie wenigstens einen der Transistoren des besagten Strangs durchschaltet, wenn das Potential der Plusleitung einen bestimmten oder vorbestimmten Wert überschreitet, der einerseits zwischen dem Einfachen und dem Zweifachen des Begrenzungsspannungswerts liegt und der andererseits kleiner als der Wert der maximal zulässigen Spannung für die elektronische Steuer- und Kontrolleinheit ausfällt.

6. Einrichtung nach einem der Ansprüche 1 bis 4, **dadurch gekennzeichnet, dass** die Leistungstransistoren (MHS, MHL) ein und desselben Strangs geeignet sind, bei einer Spannung an der Plusleitung in Reihe zu arbeiten, die größer als die maximal zulässige Spannung für die elektronische Steuer- und Kontrolleinheit ist, und dass die Schutzvorrichtung (40) so gestaltet ist, dass sie die beiden Transistoren des besagten Strangs durchschaltet, wenn das Potential der Plusleitung einen bestimmten oder vorbestimmten Wert überschreitet, der nahe beim Wert der maximal zulässigen Spannung für die elektronische Steuer- und Kontrolleinheit liegt, wobei er kleiner als dieser ist.

7. Einrichtung nach Anspruch 6, **dadurch gekennzeichnet, dass** die Schalter der besagten Brücke in Form von Leistungstransistoren (MHS, MHL) auch jeweils eine Begrenzungsvorrichtung (60) zur Begrenzung der aus der besagten Speiseleitung (+) kommenden Überspannungen aufweisen, die bei einer Spannung mit einem als Begrenzungsspannung bezeichneten bestimmten oder vorbestimmten Wert aktiv ist, der größer als die maximal zulässige Spannung für die elektronische Steuer- und Kontrolleinheit ist.

8. Einrichtung nach einem der vorangehenden Ansprüche, **dadurch gekennzeichnet, dass** die Schutzvorrichtung (40) an die Plusleitung (+) und an das Gate eines der Transistoren des Strangs (T) angeschlossen ist.

9. Einrichtung nach einem der vorangehenden Ansprüche, **dadurch gekennzeichnet, dass** die Schutzvorrichtung (40) wenigstens eine Begrenzerdiode (40) umfasst, welche die Plusleitung (+) elektrisch mit einer Leitung eines Gates (G12) des an die Masseleitung (35) angeschlossenen Leistungstransistors (MHL) des Strangs verbindet.

10. Einrichtung nach Anspruch 9, **dadurch gekennzeichnet, dass** die Schutzvorrichtung (40) mehrere in Reihe geschaltete Begrenzerdioden in der Ausführung als Zener- oder Lawinendioden umfasst.

11. Einrichtung nach einem der Ansprüche 1 bis 8, **dadurch gekennzeichnet, dass** die Schutzvorrichtung (40) einen Vergleicher oder einen Operationsverstärker umfasst, um das Potential der Plusleitung (+) mit einer Referenzspannung zu vergleichen.

12. Einrichtung nach einem der vorangehenden Ansprüche, **dadurch gekennzeichnet, dass** die Transistoren (MHS, MLS) als MOSFET-Transistoren ausgeführt und spannungskalibriert sind, um bei einer kalibrierten Spannung kleiner als eine bestimmte oder vorbestimmte Spannung im Falle eines Lastabwurfs mit Lawineneffekt arbeiten.

13. Einrichtung nach einem der vorangehenden Ansprüche, **dadurch gekennzeichnet, dass** die Begrenzungsvorrichtung (60) aus einer Begrenzerdiode besteht.
